# EUROPEAN PATENT APPLICATION

(11) **EP 2 060 613 A1**
(43) Date of publication of application: **20.05.2009**
(21) Application number: 08169160.2
(22) Date of filing: 14.11.2008
(51) Int. Cl.: C09K 8/72

(54) **Method of treating subterranean formations by in-situ hydrolysis of organic acid esters**

(30) Priority: 16.11.2007 US 988716 P
(71) Applicant: BJ Services Company, Houston, TX 77041 (US)
(72) Inventor: Wang, Xiaolan, Texas 77379 (US); Qu, Qi, Texas 77379 (US); Boles, Joel L., Texas 77388 (US)
(74) Representative: Lucas, Brian Ronald

(57) **Abstract**

An oil or gas well penetrating a subterranean formation, such as a carbonate formation, is treated with a well treatment fluid which contains an organic ester. The fluid may be an oil-in-water emulsion of the organic ester and an emulsifier or a homogeneous solution of organic ester and a water/mutual solvent solution. Acid is produced in-situby hydrolysis of the organic ester.

## Description

This application claims the benefit of U.S. patent application serial no. 60/988,716, filed on November 16, 2007.

### Field of the Invention

The invention relates to a method of treating a subterranean formation penetrated by an oil or gas well by a well treatment fluid containing an organic acid ester.

### Background of the Invention

Matrix acidizing is a common method used to stimulate and enhance the production of hydrocarbons from a hydrocarbon producing formation. In matrix acidizing, a fluid containing an acid or acid-forming material is injected into the formation such that the acid or acid-forming material reacts with minerals in the formation. Permeability of the formation is thereby increased. Formation damage caused by drilling mud invasion and clay migration is removed during the process.

For most matrix acid treatments, acid is injected into the reservoir below fracturing rates and pressures. To obtain the maximum benefits of matrix acidizing, it is often desirable to treat the entire productive interval of the formation with the stimulation fluid. As the conventional stimulation fluid is pumped, it preferentially enters the interval of least resistance (lowest stress) or highest permeability and the acid reacts with the formation material and opens additional flow paths. Once the injected acid enters into the high permeability zone, it increases formation permeability and further increases acid intake into the same high permeability zone. As a result, the high permeability interval or non-damaged zone of the formation receives most or all of the stimulation while the desired low permeability or damaged zones do not receive the desired stimulation. In most cases, the low permeability or damaged zone is the portion of the reservoir that benefits the least from stimulation.

For the wells with low production rate due to low permeability or formation damage from fine or solid invasion, deep matrix acidizing around the wellbore is desired to uniformly increase the permeability of the formation. This, however, is not an easy task since conventional acids will react with the formation to form wormholes (or paths of least resistance in which subsequent acid will follow) and increased acid leak-off into the formation from live acid (HCl) reaction and reduces penetration distance. In most cases, even excess volume of live acid only can penetrate the near wellbore area in short distance and some types of retardation have to be employed to achieve deep penetration.

Depending on the formation condition, various diverting techniques (chemical and mechanical), such as particulate diverting agents, ball sealer, foams, and polymer pills, have been used both successfully and unsuccessfully in gravel pack and stimulation treatments for many years. With numerous options of chemical diverting or bridging agents available, the type of product used varies from application to application and in some cases may even cause formation damage by the chemical residues.

Without proper diversion, the acid, by flowing to the higher permeability zone, leaves the low permeability zone untreated. This is especially true for matrix treatments of long open hole horizontal wells where it is even more difficult to ensure uniform distribution of treatment fluid across the treatment interval due to the length of the zone treated and potential variation of the formation properties. A successful diversion technique is critical to place the acid to the location where damage exists.

The overall success or failure of many acid treatments is often judged by the ability to inject or direct the acid into the damaged or lower permeability zone. Without good diversion, the results of the acid treatment often lead to either incomplete damage removal and/or requirements for uneconomical volumes of treatment fluids.

Alternatives to matrix acidizing which ensure the uniform distribution of treatment fluid in lower permeability zones are desired. In particular, matrix acidizing alternatives which do not require the use of a diverting agent are desired.

Further, alternatives are desired for matrix acidizing having minimal corrosion tendencies. One of the major concerns of using acids in oilfield stimulation is corrosion of the acid onto metal tubulars and coil tubing. It is desirable to prevent acid corrosion at high well temperatures. In particular, the development of well treatment fluids is desirable which exhibit minimum metal corrosivity while still being reactive to formation materials. Such alternatives would provide increased formation permeability or remove formation damage.

### Summary of the Invention

Matrix acidizing may be effectuated by the use of well treatment fluids containing at least one organic acid ester. The organic acid ester hydrolyzes in-situ. Typically, the well treatment fluids do not react with the formation until after commencement of hydrolysis of the ester. The well treatment fluids provide a cost-effective means of delivering an inert fluid in an aqueous solution downhole and thus have particular applicability in stimulation as well as damage removal from formations.

The treatment fluids defined herein are especially suitable for deep matrix acidizing since they penetrate deep into the rock matrix without changing the permeability of the formation and typically achieve uniform permeability enhancement of the formation. The entire productive interval of the formation may be treated with a well treatment fluid defined herein without the use of a diverting agent.

In addition to stimulating formation permeability, the reactive well treatment fluids defined remove formation damage. In light of the fact that the acid does not react with the formation until it forms in-situ, minimal, if any, corrosion tendencies to oilfield tubulars occur. Minimization of corrosion is particularly desirable since the well treatment fluids have application in high-temperature, high-pressure deep wells as well as in stimulation applications delivered through coil tubing. The well treatment fluids are particularly effective in the treatment of carbonate formations.

The organic ester may be included within an oil-in-water emulsion wherein the oil phase includes an emulsifier. The organic may alternatively be a component of a homogeneous solution with a solvent of water and a mutual solvent.

Suitable organic acid esters include esters of organic sulfonic acids, such as methyl *p*-toluenesulfonate, ethyl *p*-toluenesulfonate, methyl methanesulfonate and ethyl methanesulfonate.

Preferred emulsifiers are nonionic long chain emulsifiers as well as those based on fatty alcohols.

### Brief Description of the Drawings

In order to more fully understand the drawings referred to in the detailed description of the present invention, a brief description of each drawing is presented, in which:
FIG. 1 graphically demonstrates increased permeability in a limestone core after use of an ester emulsion stimulation fluid, as defined herein.
FIG. 2 is computerized tomography ("CT") scans of a limestone core prior and subsequent to using an ester emulsion stimulation fluid, as defined herein.
FIG. 3 demonstrates permeability testing using a well treatment fluid defined herein in high and low permeability limestone cores at 180° F.
FIG. 4 demonstrates permeability testing using a well treatment fluid defined herein in high and low permeability limestone cores at 230° F.
FIG. 5 demonstrates permeability testing using a well treatment fluid defined herein in high and low permeability limestone cores at 325° F.
FIG. 6 is a CT scan of a high permeability limestone core and a low permeability limestone core before and after stimulation treatment using a well treatment fluid defined herein.
FIGs. 7 and 8 demonstrate permeability using a well treatment fluid defined herein in high and low permeability limestone cores at 325° F and 300° F, respectively.
FIGs. 9 and 10 compare the stimulation efficiency of methyl p-toluenesulfonate to HC1.

### Detailed Description of the Preferred Embodiments

In the present invention, an oil, gas or geothermal well which penetrates a formation may be treated with a well treatment fluid which contains at least one organic acid ester. The well treatment fluids defined herein have particular applicability in the treatment of carbonate formations though they could be used also in sandstone formations in conjunction with other additives.

The organic ester may be introduced into the well as a component of an oil-in-water emulsion having an emulsifier as the oil phase. Alternatively, the well treatment fluid may be a homogeneous solution of organic acid ester and a water/mutual solvent solution. The organic ester hydrolyzes to produce an acid in-situ downhole. As such, spending of the acid fluid during injection is minimized by use of the well treatment fluid defined herein.

Typically, the well is shut-in prior to hydrolysis of the organic ester. Shut-in periods typically are at least 30 minutes with shorter times at in-situ temperatures higher than 150° F.

A typical ester is an oily organic chemical which is not miscible with water. It is necessary that the acid strength of the organic acid of the organic acid ester be such as to generate effective stimulation upon hydrolysis. It is especially preferred that the organic acid of the organic acid ester is a strong acid. The *pKₐ* of the organic acid of the organic acid ester is generally less than zero. Suitable as the organic acid ester are esters of organic sulfonic acids, such as methyl p-toluenesulfonate, ethyl p-toluenesulfonate, methyl methanesulfonate and ethyl methanesulfonate.

A stable oil-in-water emulsion may be formed by mixing the esters with water and a suitable surfactant. Typically, the emulsion contains between from about 2 to about 10 volume percent of organic acid ester.

Suitable emulsifiers are those which are capable of making an emulsion with the organic acid ester. While anionic and cationic emulsifiers may be used, nonionic emulsifiers are preferred. Preferably the nonionic emulsifier is a long chain emulsifier or an emulsifier based on a fatty alcohol.

For instance, suitable non-ionic emulsifiers include fatty alcohol ethoxylates such as those having 6-mole ethoxylation on a 12-carbon alcohol. Further suitable as the nonionic emulsifiers are alkyl and alkylaryl polyether alcohols such as linear or branched polyoxyethylene alcohols, more preferably linear polyoxyethylene alcohols, comprising (a) from about 8 to about 30, preferably about 8 to about 20, carbon atoms, and (b) comprising about 3 to about 50 moles, most preferably about 3 to about 20 moles, ethylene oxide. Further non-ionic emulsifiers are linear polyoxyethylene alcohols having from about 13 to about 15 carbon atoms and comprising about 10 moles ethylene oxide. Further suitable emulsifiers include nonylphenol ethoxylate having an HLB value of about 16 and comprising 20 ethylene oxide units per molecule, octylphenol ethoxylate having an HLB value greater than 13.5, and nonylphenol ethoxylate having an HLB value greater than 13.

In another embodiment, the non-ionic emulsifiers are a combination of alkylaryl ethoxylate and a polyethylene glycol (PEG) ester of fatty acids such as an alkylaryl ethoxylate like octyl, nonyl or dodecylphenol with 3 to 13 moles of ethylene oxide while the PEG ester is of molecular weight range 200 600 with either one or two moles of unsaturated fatty acids.

In another embodiment, the well treatment fluid is a homogeneous solution of the ester in a water/mutual solvent mixture. The advantage of such fluids is their capability to deliver designated amount of active chemical in an aqueous solution. As such, the solvent mixture serves as a delivery system for the organic acid ester. Typically, the homogeneous solution contains from about 2 to about 15 volume percent of the organic acid ester.

The mutual solvent may be any solvent which is suitable for solubilizing hydrocarbons in water. Suitable mutual solvents include glycols, such as ethylene glycol, glycol ethers such as monobutyl ethers like ethylene glycol monobutylether, dipropylene glycol methyl ether, etc., terpenes, such as limonene, a C₃ to C₉ alcohol, such as isopropanol, as well as mixtures thereof. Typically, the amount of mutual solvent in the water/mutual solvent mixture is between from about 30 to about 90 volume percent.

The emulsion or homogeneous solution typically alleviates difficulties with onsite delivery as well as environmental concerns since it is not necessary to use large volume of the organic acid ester.

When pumping downhole, the well treatment fluids defined herein generally do not initially react with the formation. Reaction with the formation does not really commence until the ester starts to hydrolyze. As such, acid is produced in-situ, typically after a period of shut-in time.

Since the well treatment fluids defined herein create acid in-situ, the fluids can penetrate deeper into the rock matrix. As such, the well treatment fluids are ideally suited for deep matrix acidizing without changing formation permeability.

Further, the well treatment fluid defined herein can penetrate deeper into the formation than a fluid containing a live acid which is directly introduced into the wellbore. For instance, a well treatment fluid containing an organic acid ester as defined herein will penetrate deeper into the formation than a well treatment fluid containing the same volumetric amount of acid (though being a live acid) in a prior art well treatment fluid. Further, well treatment fluids defined herein uniformly react with the entire carbonate or sandstone matrix during shut-in. Common acids, such as HC1, cannot achieve similar effects because they spend rapidly by reacting with the formation once coming into contact with the formation. Further, the amount of acid spent near the wellbore is dramatically increased when a well treatment fluid containing a live acid is used versus the well treatment fluids defined herein.

In light of the fact that the acid in the well treatment fluid hydrolyzes downhole, it is not necessary to use a diverting agent or diverter in combination with the well treatment fluid. In fact, the well being treated may be effectively treated without any usage of a diverting agent.

Since the emulsion is not reactive until the period of shut-in, it will enter both high and low perm zones proportionally when used in long heterogeneous reservoirs. Unlike a conventional acid fluid which enters into high perm zone, increases the permeability of the zone and further increases acid intake into the zone, the emulsion system defined in getting the stimulation fluid and acid generated in-situ during shut-in can stimulate both zones. In this way, the procedure becomes simplified and costs are reduced since the diverting agent might not be needed. Moreover, potential formation damage caused by diverting agent also can be eliminated. Lastly, the corrosion rate of such ester emulsion based stimulation is low compared to regular acid fluids since the emulsion is a mild pH fluid and the ester concentration in the emulsion system is low (5-10% volume).

The following examples are illustrative of some of the embodiments of the present invention. Other embodiments within the scope of the claims herein will be apparent to one skilled in the art from consideration of the description set forth herein. It is intended that the specification, together with the examples, be considered exemplary only. All percentages set forth in the Examples are given in terms of volume percent except as may otherwise be indicated.

### EXAMPLES

### Example 1.

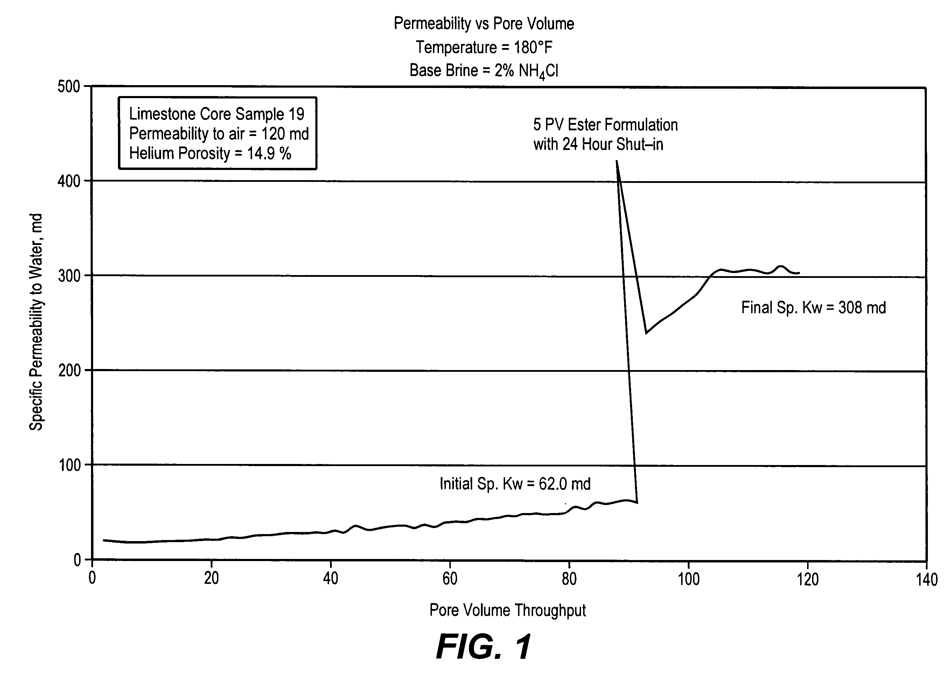

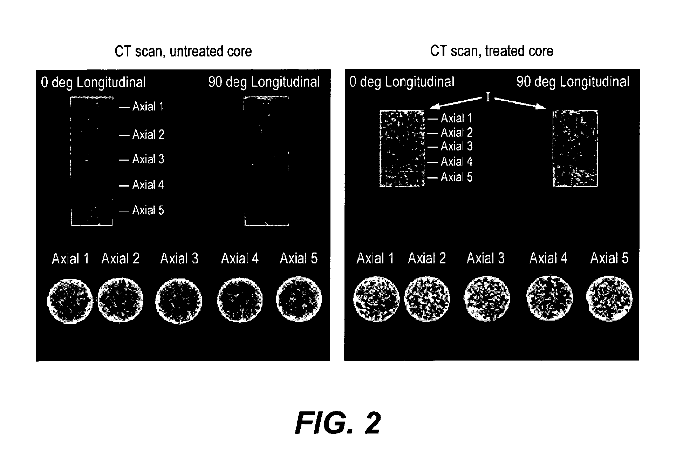

An aqueous emulsion was prepared for use as a stimulation fluid. The emulsion contained 10% methyl p-toluenesulfonate aqueous emulsion in 1% nonylphenoxypoly(ethyleneoxy)ethanol surfactant, as the oil phase. The emulsion of five pore volumes was then pumped into a limestone core with permeability of 120 md (to air) at 180°F. After shut-in for about 24 hours, the stimulation fluid was flown out. An increased core permeability of 5 times was obtained, as illustrated in FIG. 1. CT scans of the core, illustrated in FIG. 2, demonstrate a uniform increase of formation permeability (versus a limited number of wormholes).

### Example 2.

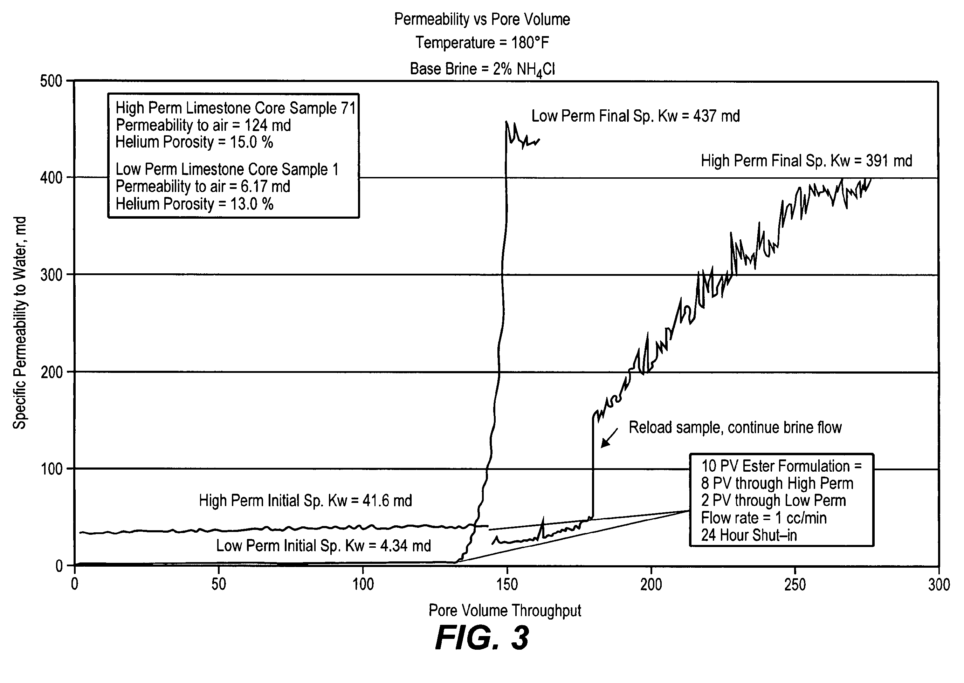

The 10% ester emulsion stimulation fluid of Example 1 was pumped into a parallel assembly of two limestone cores; one core having a permeability of 124 md, the other core having a permeability of 6.17 md. After pumping the emulsion of ten core volumes, it was determined that the higher permeability core took eight-pore volume fluid and the low permeability core took 2-pore volume fluid. After a shut-in period of 24 hours at 180° F, the stimulation fluid was flown out. The low perm core was shown to increase permeability by 100 times vs. the high perm core by about 10 times. This is illustrated in FIG. 3. FIG. 3 demonstrates that a diverting agent may not be needed for stimulation treatments of heterogeneous formation when the ester emulsion stimulation fluid is used.

### Example 3

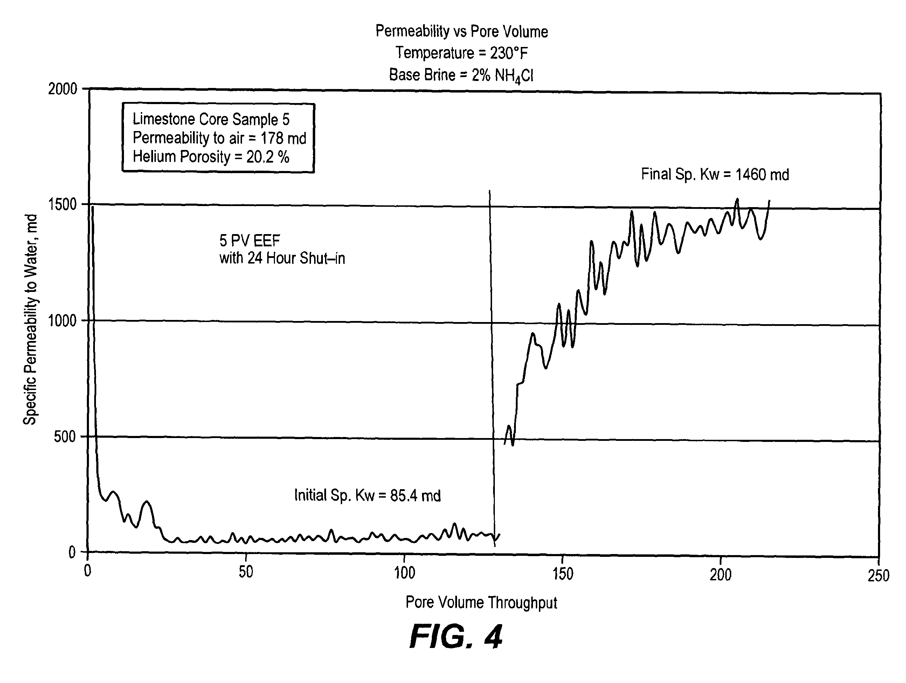

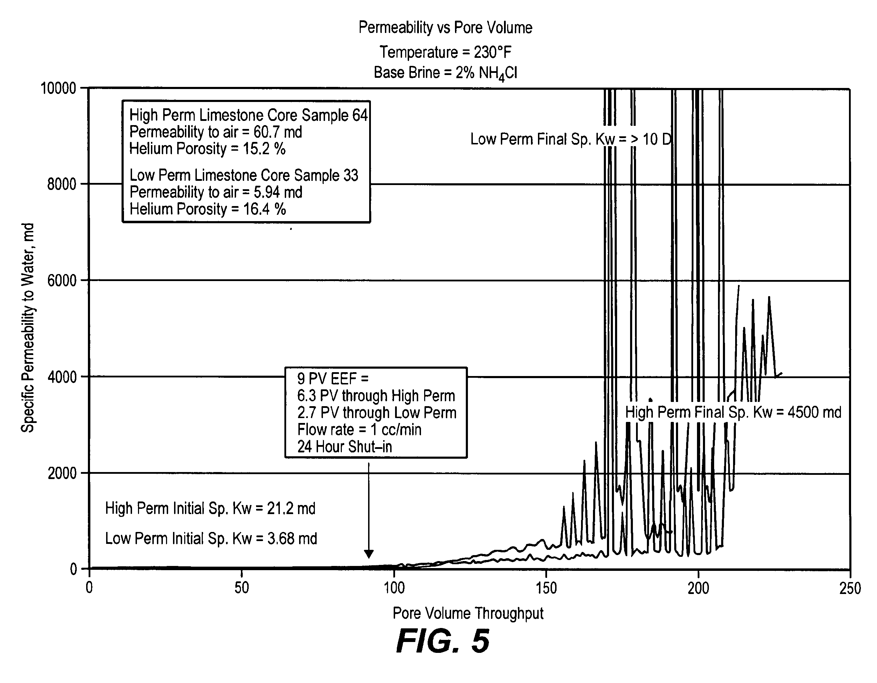

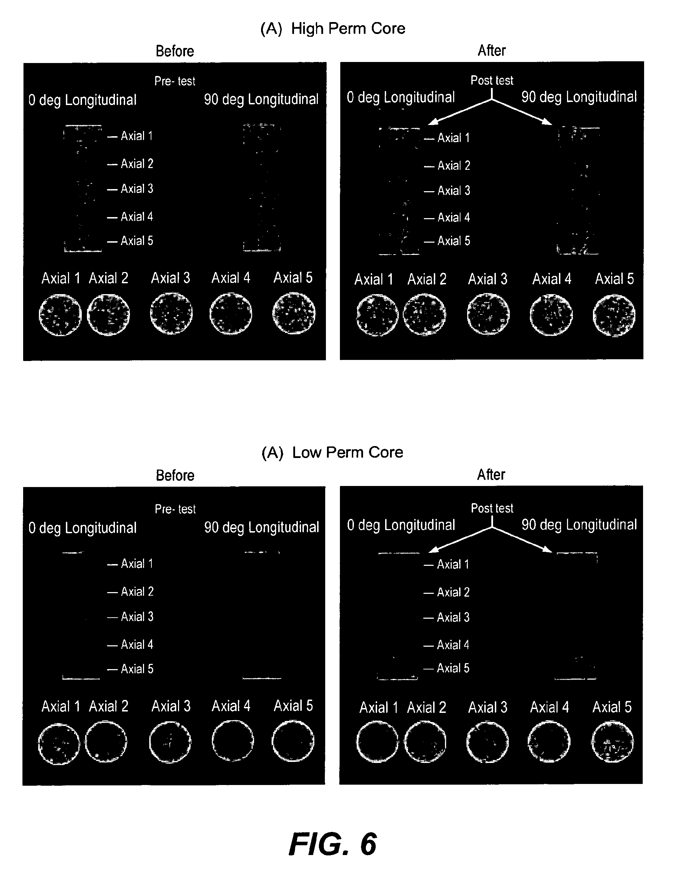

Core and parallel core flow tests were performed at 230°F. as set forth in Example 3 above. Five pore volumes of a fluid of 5% methyl p-toluenesulfonate emulsion in 1% nonylphenoxypoly(ethyleneoxy)ethanol emulsifier were pumped into a limestone core with permeability of 178 md (to air) at 230° F. After shutting in for 24 hours, the stimulation fluid was flown out. An increased core permeability of 17 times was obtained, as shown in FIG. 4. In a parallel test, the 5% ester emulsion stimulation fluid was pumped into a parallel assembly of two limestone cores (one core with permeability of 60.7 md, the other one with permeability of 5.94 md) at 230° F. After pumping the emulsion of nine core volumes, it was determined that the high permeability core took 6.3 pore volumes of the fluid and the low permeability core took 2.7 pore volumes of the fluid. Similar to the 180°F parallel core flow testing of Example 3, the permeability increase is more significant for the low perm core than the high perm core, shown in FIG. 5. This demonstrates that the diverting agent is not necessary for stimulation treatment of heterogeneous formation when pumping the ester emulsion stimulation fluids. The CT scans of the high perm core and the low perm core before and after stimulation treatment are further shown in FIG. 6.

### Example 4.

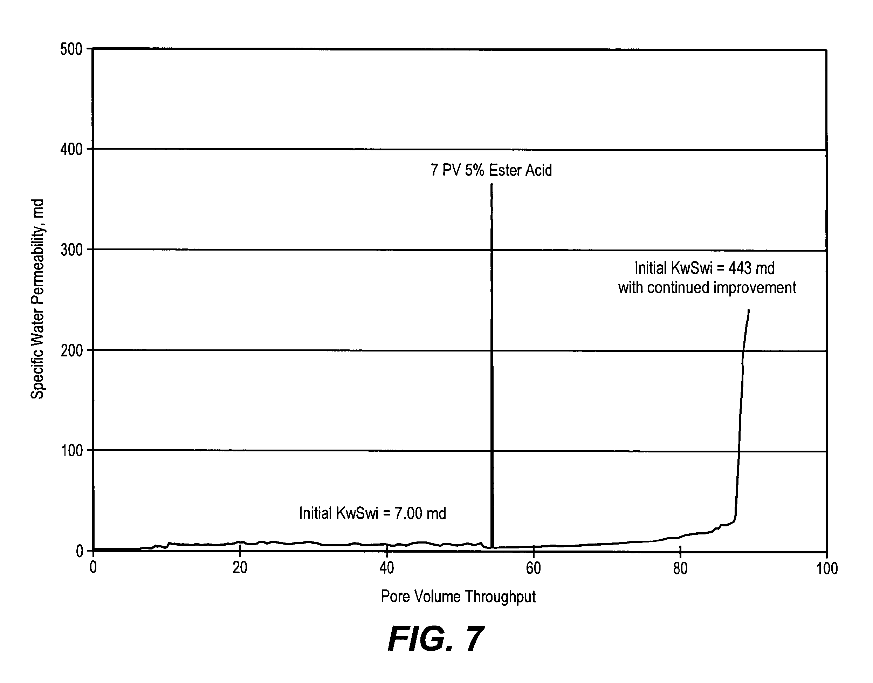

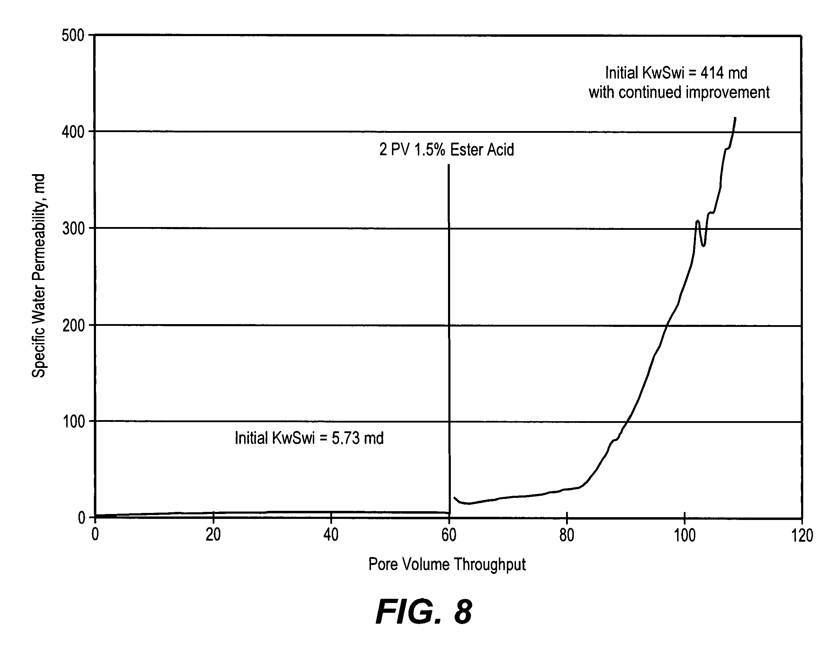

Core flow testing was also performed at 325° F. The 5% ester emulsion of Example 4 was injected into the carbonate core with permeability (to water) of 7.0 md at 325° F and shut in for overnight. After the stimulation fluid was flown out, the permeability became 443 md (63 times increase), and permeability improvement was continuing with water injection. The results are illustrated in FIG. 7. A lower concentration of ester concentration was also tested at 300°F. An ester emulsion containing 1.5% volume percent of methyl p-toluenesulfonate emulsion in 1% nonylphenoxypoly(ethyleneoxy)ethanol emulsifier was injected into the carbonate core with permeability (to water) of 5.73 md and shut in for overnight. After the stimulation fluid was flown out, the permeability became 414 md (72 times increase), and permeability improvement was continuing with water injection. The results are set forth in FIG. 8.

### Example 5.

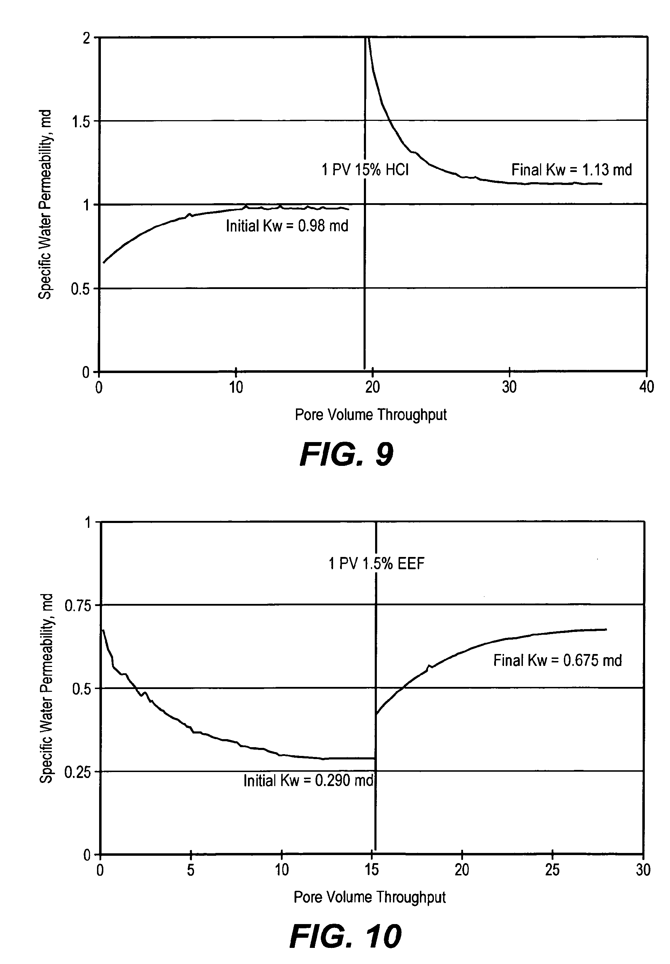

The stimulation efficiency of methyl p-toluenesulfonate (*p*-TSME) was compared to that of HCl, as illustrated in FIG. 9 and FIG. 10. In FIG. 9, 1 pore volume of HCl (15% weight) was injected into a three-inch carbonate core with permeability to air of 2 md. Upon flowing back after one hour, the permeability to water changed from 0.98 md to 1.13 md representing a 15% improvement. Similarly, 1 pore volume of *p*-TSME (1.5% volume) was injected into a carbonate core with permeability to air of 2 md. Upon flowing back after shut-in overnight, the permeability to water changed from 0.29 md to 0.675 md representing a 133% improvement (FIG. 10). By examining the treated cores, severe erosion was found around the inlet of the HCl treated core. After splitting the core plug in the middle, the first 1/3-inch of the treated core from inlet side showed white color due to large amount of loose fine particles. For the *p*-TSME treated core, neither erosion nor white color was observed. Based on calculation, a typical 5% (volume) *p-*TSME emulsion is equivalent to a 1.25% (weight) HCl for the same fluid volume. The stimulation efficiency of *p*-TSME, however, is much higher compared to that of HCl. As shown in FIG. 9 and FIG. 10, in HCl stimulation, HCl spends rapidly by reacting with carbonate formation once it gets into contact with the formation. This increases the formation permeability and further increases the amount of acid spent near the wellbore. Even excess volume of HCl only penetrates the near wellbore area in short distance. For *p*-TSME stimulation, however, the ester does not react with the carbonate formation initially until the ester starts to hydrolyze and to produce acid in-situ after a period of shut-in time. Thus, for the same fluid volume, more acid reacts with the formation material effectively in *p*-TSME stimulation. This further demonstrates that *p*-TSME stimulation fluid is suitable for deep matrix acidizing because it penetrates deeper into rock matrix without changing formation permeability and spending of the acid fluid during injection and further penetrates deeper into the formation with the same volume of the acid fluid and thus uniformly reacts with the entire carbonate matrix during shut-in.

### Examples 6-41.

These Examples illustrate the corrosivity effects of the ester emulsion based stimulation fluid (EEF) of Example 3. The acceptable corrosion rates of rigid metal material and coil tubing are 0.05 pound per square foot (ppf²) per contact and 0.02 ppf² per contact, respectively.

Corrosion tests were conducted on 5 metals with 4 fluid systems containing the 5% EEF for a cumulative amount of time. The four test solutions were:
Test Fluid A: EEF
Test Fluid B: EEF + 2 gpt NE-940 + 10 gpt FERROTROL 800L;
Test Fluid C: EEF + 2 gpt NE-940 + 10 gpt FERROTROL 800L + 20 gpt CI-27;
Test Fluid D: EEF + 2 gpt NE-940 + 10 gpt FERROTROL 800L + 20 gpt CI-27 + 30 ppt HY-TEMP I
wherein:
NE-940 is a non-emulsifier composed of a blend of polyglycols in alcohol;
CI-27 refers to an organic corrosion inhibitor;
Ferrotrol-800 L refers to a chelating iron control additive; and
HY-TEMP I refers to an organic corrosion inhibitor intensifier.
NE-940, CI-27, FERROTROL-800 L and HY-TEMP I are all available from BJ Services Company.

The test metals were QT-800, QT-900 coil tubing metal coupon, N-80, Cr-13 and P-110.

A fresh mixture of Test Fluid A had been mixed using a Waring blender was used on the same test coupons in one to three separate tests. The metal coupons were prepared for testing by placing them into a freshly prepared solution of the desired test fluid. The fluid was then placed into a corrosion autoclave, sealed and the temperature and pressure were allowed to rise to 350° F and 3, 500 psi respectably over a 40 minute time frame. The pressure and temperature were then held at these high points for 30 minutes. The fluid was then cooled over 60 minutes and the coupons were then removed from the autoclave at a temperature of 180° F and a pressure oaf 14.7 psi. After the coupons were bead blasted and cleaned, they were weighted and stored. If the coupons had less than 0.0500 pounds per square foot weight loss they were again placed into the same test solution for another approximate two hours corrosion test. This was repeated for any coupons that still had less than a cumulative weight loss of 0.0500 pounds per square foot after the second test. The results are set forth in Table I below wherein the following Pitting Scale was used:
0-TR- Zero (No staining or any surface irregularities.)
0-1- Slight staining of surface, but no surface irregularities.
1 - A trace amount of pitting on surface.
2 - A small amount of pitting on the surface.
3 - A medium amount of pitting on the surface.
4 - A large amount of pitting on the surface.
5 - Large holes or very deep pits anywhere on the test coupon.
E - Indicates the edge of the coupon.

**Table I**

| Ex. No. | Time Hrs* | Test Fluid | Test Metal | Corrosion Rate Lbs. / Sq. Ft. @ Cumulative Hours | Corrosion Rate Lbs. / Sq. Ft. Per 2 HOURS | Pitting Number |
|---|---|---|---|---|---|---|
| 6 | 2 | A | 1 | 0.0631 @ 2 Hrs | 0.0631 | 1 |
| 7 | 2 | B | 1 | 0.0580 @ 2 Hrs | 0.0580 | 2 |
| 8 | 2 | C | 1 | 0.0484 @ 2 Hrs | 0.0484 | 1 |
| 9 | 2 | D | 1 | 0.0151 @ 2 Hrs | 0.0151 | 0-1 |
| 10 | 2 | A | 2 | 0.0614 @ 2 Hrs | 0.0614 | 0 |
| 11 | 2 | B | 2 | 0.0557 @ 2 Hrs | 0.0557 | 2 |
| 12 | 2 | C | 2 | 0.0266 @ 2 Hrs | 0.0266 | 0 |
| 13 | 2 | D | 2 | 0.0126 @ 2 Hrs | 0.0126 | 0 |
| 14 | 2 | A | 3 | 0.0560 @ 2 Hrs | 0.0560 | 0 |
| 15 | 2 | B | 3 | 0.0484 @ 2 Hrs | 0.0484 | 1 |
| 16 | 2 | C | 3 | 0.0386 @ 2 Hrs | 0.0386 | 2 |
| 17 | 2 | D | 3 | 0.0162 @ 2 Hrs | 0.0162 | 0 |
| 18 | 2 | A | 4 | 0.0473 @ 2 Hrs | 0.0473 | 0 |
| 19 | 2 | B | 4 | 0.0469 @ 2 Hrs | 0.0469 | 0 |
| 20 | 2 | C | 4 | 0.0215 @ 2 Hrs | 0.0215 | 0 |
| 21 | 2 | D | 4 | 0.0146 @ 2 Hrs | 0.0146 | 0 |
| 22 | 2 | A | 5 | 0.0617 @ 2 Hrs | 0.0617 | 0 |
| 23 | 2 | B | 5 | 0.0651 @ 2 Hrs | 0.0651 | 0 |
| 24 | 2 | C | 5 | 0.0408 @ 2 Hrs | 0.0408 | 1 |
| 25 | 2 | D | 5 | 0.0135 @ 2 Hrs | 0.0135 | 0 |
| 26 | 4 | C | 1 | 0.0779 @ 4 Hrs | 0.0295 | 1 |
| 27 | 4 | D | 1 | 0.0276 @ 4 Hrs | 0.0125 | 0 |
| 28 | 4 | C | 2 | 0.0471 @ 4 Hrs | 0.0205 | 0 |
| 29 | 4 | D | 2 | 0.0242 @ 4 Hrs | 0.0116 | 0 |
| 30 | 4 | C | 3 | 0.0635 @ 4 Hrs | 0.0249 | 2 |
| 31 | 4 | D | 3 | 0.0300 @ 4 Hrs | 0.0138 | 0 |
| 32 | 4 | C | 4 | 0.0461 @ 4 Hrs | 0.0246 | 0 |
| 33 | 4 | D | 4 | 0.0302 @ 4 Hrs | 0.0156 | 0 |
| 34 | 4 | C | 5 | 0.0865 @ 4 Hrs | 0.0448 | 2 |
| 35 | 4 | D | 5 | 0.0245 @ 4 Hrs | 0.0110 | 0 |
| 36 | 6 | D | 1 | 0.0402 @ 6 Hrs | 0.0126 | 0 |
| 37 | 6 | D | 2 | 0.0363 @ 6 Hrs | 0.0121 | 0 |
| 38 | 6 | D | 3 | 0.0453 @ 6 Hrs | 0.0153 | 0 |
| 39 | 6 | C | 4 | 0.0698 @ 6 Hrs | 0.0237 | 0 |
| 40 | 6 | D | 4 | 0.0492 @ 6 Hrs | 0.0190 | 0 |
| 41 | 6 | D | 5 | 0.0358 @ 6 Hrs | 0.0116 | 0 |

| | | | | | | |
|---|---|---|---|---|---|---|
| * Cumulative | | | | | | |

Table I demonstrates that the addition of the well treatment fluid defined herein reduces the corrosion rate at low or trace pitting.

From the foregoing, it will be observed that numerous variations and modifications may be effected without departing from the true spirit and scope of the novel concepts of the invention.

## Claims

1. A method of treating an oil or gas well penetrating a formation which comprises:
(a) introducing into the oil or gas well a well treatment fluid comprising an organic ester; and
(b) hydrolyzing the organic ester in-situ to produce acid
wherein the well treatment fluid is either (i) an oil-in-water emulsion of an emulsifier and the organic ester; or (ii) a homogeneous solution of organic ester and a water/mutual solvent solution.

2. The method of Claim 1, wherein the organic ester is an ester of an organic sulfonic acid.

3. The method of Claim 1 or 2, wherein the ester of an organic sulfonic acid is selected from the group consisting of methyl p-toluenesulfonate, ethyl p-toluenesulfonate, methyl methanesulfonate and ethyl methanesulfonate.

4. The method of any of Claims 1 to 3, wherein the oil or gas well is treated in the absence of a diverting agent.

5. The method of any of Claims 1 to 4, wherein the emulsifier is non-ionic.

6. The method of any of Claims 1 to 5, wherein the well is shut-in prior to hydrolysis of the organic ester.

7. The method of any of Claims 1 to 6, wherein the mutual solvent of the water/mutual solvent solution is selected from the group consisting of glycols, glycol ethers, terpenes, and C₃ to C₉ alcohols.

8. The method of Claim 9, wherein the glycol is ethylene glycol monobutyl ether.

9. The method of any of Claims 1 to 8, wherein the formation is a carbonate formation.

10. The method of Claim 1, wherein the carbonate subterranean formation is subjected to matrix acidizing by injecting into the well which penetrates the formation the well treatment fluid and then increasing the permeability of the carbonate subterranean formation.
